# EUROPEAN PATENT APPLICATION

(11) **EP 2 945 049 A1**
(43) Date of publication of application: **18.11.2015**
(21) Application number: 15167611.1
(22) Date of filing: 13.05.2015
(51) Int. Cl.: G06F 3/0488, G06F 3/0482, G06F 3/0481, G06F 3/0354, H04N 21/47

(54) **TOUCH CONTROL ASSEMBLY, DEVICE CONTROL METHOD, CONTROLLER AND ELECTRONIC EQUIPMENT**

(30) Priority: 13.05.2014 CN 201410200756
(71) Applicant: Xiaomi Inc., Beijing 100085 (CN)
(72) Inventor: Wang, Chuan, 100085 Beijing (CN); Li, Chuangqi, 100085 Beijing (CN); Wang, Fa, 100085 Beijing (CN); Wang, Hui, 100085 Beijing (CN)
(74) Representative: Delumeau, François Guy

(57) **Abstract**

The disclosure provides a touch control assembly, a method for controlling a device, a controller and an electronic device, which belong to the equipment control field. The touch control assembly comprises: a touch pad (120) and a controller (140); the touch pad (120) configured to detect a touch control operation on the touch pad (120), and send a touch control signal corresponding to the touch control operation to the controller (140); the controller (140) configured to parse the touch control operation according to the touch control signal, and control the electronic device according to the touch control operation and the working state of the electronic device. In this disclosure, the controller (140) parses the touch control operation on the touch pad (120) according to the touch control signal sent by the touch pad (120), and controls the electronic device according to the touch control operation and the working state of the electronic device.

## Description

### TECHNICAL FIELD

The present disclosure relates to the field of equipment control and, more particularly, to a touch control assembly, a method for controlling a device, a controller and an electronic device.

### BACKGROUND

With the continuous development of electronic technology, intelligent electronic devices are becoming more and more popular. People usually need to control their electronic devices, for instance to adjust volume, for obtaining best experience effect when they are using the electronic devices.

For a large electronic device, generally it may be controlled by remote control or physical keys arranged in the electronic device. Taking TV for example of the electronic device, the TV may be equipped with a remote control in related technology, and almost all TV operations may be accomplished by the remote control. When the remote control for the TV is lost or destroyed, the user may also control the TV by several physical keys arranged on the TV. For instance, a TV is typically equipped with 6 physical keys. They are power key, menu key, volume+ key, volume- key, channel+ key and channel- key. The user may control the TV by these 6 physical keys when the remote control is not workable.

During accomplishing the present disclosure, there are at least the problems as below are found out in the related technology:

To accomplish more functions, the electronic device generally needs to be arranged with multiple physical keys, with different function for each key respectively. The user may easily conduct wrong operation while using the physical keys. For example, it is possible that the user may press the channel key while he is intending to adjust volume through the physical key, causing inconvenience for user to operate and thus poor user experience.

### SUMMARY

In order to solve the problem that the user may easily conduct wrong operation while using the physical keys, and therefore causes inconvenience for user to operate, the embodiments of the present disclosure provide a touch control assembly, a method for controlling a device, a controller and an electronic device. The technical solutions are as following:

One aspect provides a touch control assembly for use in an electronic device. The touch control assembly comprises: a touch pad and a controller;

The touch pad is configured to detect a touch control operation on the touch pad and send a touch control signal corresponding to the touch control operation to the controller;

The controller is configured to receive the touch control signal, parse the touch control operation according to the touch control signal, obtain working state of the electronic device, and control the electronic device according to the touch control operation and the working state of the electronic device.

Preferably, the controller is configured to control the electronic device to start when the electronic device is in standby state and the touch control operation is a first operation;

The controller is configured to control the electronic device to be standby when the electronic device is in started state and the touch control operation is a second operation.

Preferably, the controller is configured to switch an icon corresponding to a selected functionality item in a control interface when the electronic device is in the started state and displays the control interface, and when the touch control operation is a third operation; wherein the control interface comprises the corresponding icon of at least one functionality item.

Preferably, the controller is configured to obtain GUI (Graphical User Interface) display state of the electronic device when the electronic device is in the started state and does not display the control interface; determines a functionality item list corresponding to the control interface according to the GUI display state, and displays the corresponding icon of at least one functionality item according to the functionality item list; the at least one functionality item is all or portion of functionality items comprised in the functionality item list.

Preferably, the controller is configured to perform a control instruction corresponding to a selected functionality item in the control interface when the electronic device is in the started state and displays the control interface, and when the touch control operation is a fourth operation.

A second aspect provides a method for controlling a device being used in the touch control assembly described in the above mentioned first aspect. The method comprises:

Receiving a touch control signal sent by the touch control assembly and corresponding to the touch control operation on the touch pad;

Parsing the touch control operation according to the touch control signal;

Obtaining the working state of the electronic device; and

Controlling the electronic device according to the touch control operation and the working state of the electronic device.

Preferably, the controlling step of the electronic device according to the touch control operation and the working state of the electronic device comprises:

Controlling the electronic device to start when the electronic device is in the standby state and the touch control operation is a first operation;

Controlling the electronic device to standby when the electronic device is in the started state and the touch control operation is a second operation.

Preferably, the controlling step of the electronic device according to the touch control operation and the working state of the electronic device comprises:

Switching an icon corresponding to a selected functionality item in a control interface when the electronic device is in the started state and displays the control interface, and when the touch control operation is a third operation; wherein the control interface comprises the corresponding icon of at least one functionality item.

Preferably, the method further comprises:
Obtaining a GUI (Graphical User Interface) display state of the electronic device when the electronic device is in the started state and does not display the control interface;
Determining a functionality item list corresponding to the control interface according to the GUI display state; and
Displaying the corresponding icon of at least one functionality item according to the functionality item list; the at least one functionality item being all or portion of functionality items comprised in the functionality item list.

Preferably, the controlling step of the electronic device according to the touch control operation and the working state of the electronic device comprises:

Performing a control instruction corresponding to a selected functionality item in the control interface when the electronic device is in the started state and displays the control interface, and when the touch control operation is a fourth operation.

A third aspect provides a controller using in the touch control assembly described in the above mentioned first aspect. The controller comprises:

A touch control signal receiving module configured to receive a touch control signal sent by the touch pad in the touch control assembly and corresponding to the touch control operation on the touch pad;

A parsing module configured to parse the touch control operation according to the touch control signal;

A first state obtaining module configured to obtain the working state of the electronic device; and

A control module configured to control the electronic device according to the touch control operation and the working state of the electronic device.

Preferably, the control module comprises:
A first control module configured to control the electronic device to start when the electronic device is in the standby state and the touch control operation is a first operation; and
A second control module configured to control the electronic device to be standby when the electronic device is in the started state and the touch control operation is a second operation.

Preferably, the control module comprises:
A switching module configured to switch an icon corresponding to a selected functionality item in a control interface when the electronic device displays the control interface, and when the touch control operation is a third operation; wherein the control interface comprising the icon corresponding to at least one functionality item.

Preferably, the controller further comprises:
A second state obtaining module configured to obtain a GUI(Graphical User Interface) display state of the electronic device when the electronic device is in the started state and does not display the control interface;
A list determining module configured to determine a functionality item list corresponding to the control interface according to the GUI display state; and
A display module configured to display the control interface according to the functionality item list, wherein the at least one functionality item comprised in the control interface is all or portion of functionality items comprised in the functionality item list.

Preferably, the control module comprises:
A performing module configured to perform the control instruction corresponding to the selected functionality item in the control interface when the electronic device displays the control interface and the touch control operation is a fourth operation.

A fourth aspect provides an electronic device. The electronic device comprises:

At least one touch control assembly described in the above mentioned first aspect.

A fifth aspect provides a computer program including instructions for executing the steps of a method for controlling a device as described above when said program is executed by a computer.
This program can use any programming language and take the form of source code, object code or a code intermediate between source code and object code, such as a partially compiled form, or any other desirable form.

A sixth aspect provides a recording medium readable by a computer, this recording medium having recorded thereon a computer program including instructions for executing the steps of a method for controlling a device as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution provided by the embodiments of this disclosure may bring the following advantageous effects:
By parsing the touch control operation on the touch pad by the controller according to the touch control signal sent by the touch pad, and controlling the electronic device according to the touch control operation and the state of the electronic device, the user may control the electronic device by conducting different operations in the touch pad with no need to seek and press different physical keys. The problem of related technology that the user may easily make wrong operation when using the physical keys is solved while simplifying the user's operation and improving the user's experiences.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a block diagram illustrating a touch control assembly according to an exemplary embodiment;
Fig. 2 is a block diagram illustrating a touch control assembly according to another exemplary embodiment;
Fig. 3 is a diagram showing a configuration of a touch pad according to another exemplary embodiment;
Fig. 4 is a block diagram illustrating a touch control assembly according to a further exemplary embodiment;
Fig. 5 is a diagram showing that the user is turning on an electronic device according to a further exemplary embodiment;
Fig. 6 is a diagram showing that the user is turning off an electronic device according to a further exemplary embodiment;
Fig. 7 is a diagram displaying a control interface according to a further exemplary embodiment;
Fig. 8 is a diagram showing the functionality item switching according to a further exemplary embodiment;
Fig. 9 is a diagram showing a secondary menu according to a further exemplary embodiment;
Fig. 10 is a flow chart of a method for controlling a device according to an exemplary embodiment;
Fig. 11 is a flow chart of a method for controlling a device according to another exemplary embodiment;
Fig. 12 is a block diagram illustrating a controller according to an exemplary embodiment;
Fig. 13 is a block diagram illustrating a controller according to another exemplary embodiment;
Fig. 14 is a block diagram illustrating an electronic device according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

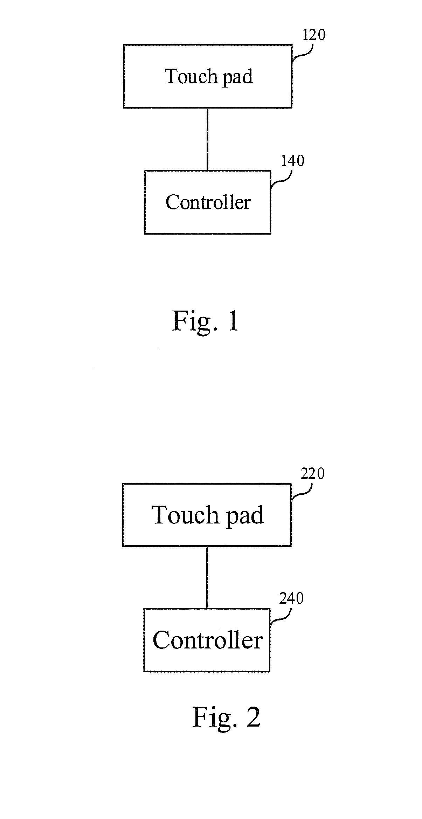

Fig. 1 is a block diagram illustrating a touch control assembly according to an exemplary embodiment. The touch control assembly may be used in an electronic device to adjust the parameters of the electronic device. The electronic device may be a TV or a display. The touch control assembly comprises: a touch pad 120 and a controller 140;

The touch pad 120 is configured to detect a touch control operation on the touch pad 120, and send a touch control signal corresponding to the touch control operation to the controller 140;

The touch pad is arranged outside of the display of the electronic device, such as at the bottom of the electronic device.

The controller 140 is configured to receive the touch control signal, parse the touch control operation according to the touch control signal, obtain working state of the electronic device, and control the electronic device according to the touch control operation and the working state of the electronic device.

In conclusion, the touch control assembly shown by the exemplary embodiment parses the touch control operation on the touch pad by the controller according to the touch control signal sent by the touch pad, controls the electronic device according to the touch control operation and the working state of the electronic device, so that the user may accomplish control of the electronic device by conducting different operations in the touch pad without looking for and pressing different physical keys. The problem that the user may easily make wrong operations when using the physical keys in related technology is solved, resulting in simplification of user operation and improve user experience.

Fig. 2 is a block diagram illustrating a touch control assembly according to another exemplary embodiment. The touch control assembly may be used in an electronic device to adjust the parameters of the electronic device. The electronic device may be a TV or a display. The touch control assembly comprises: a touch pad 220 and a controller 240;

The touch pad 220 is configured to detect a touch control operation on the touch pad 220, and send a touch control signal corresponding to the touch control operation to the controller 240;

For instance, the touch pad may be arranged with several touch control points. Electrostatic induction occurs when the user is touching the touch control point in the touch pad by the finger. A current sensing signal is generated. The touch pad generates a corresponding touch control signal according to the generated current sensing signal and sends it to the controller. The touch control signal contains an identification of the touch control point of the user's current touching location. For instance, the identification of the touch control point may be the coordinate or the serial number of the touch control point.

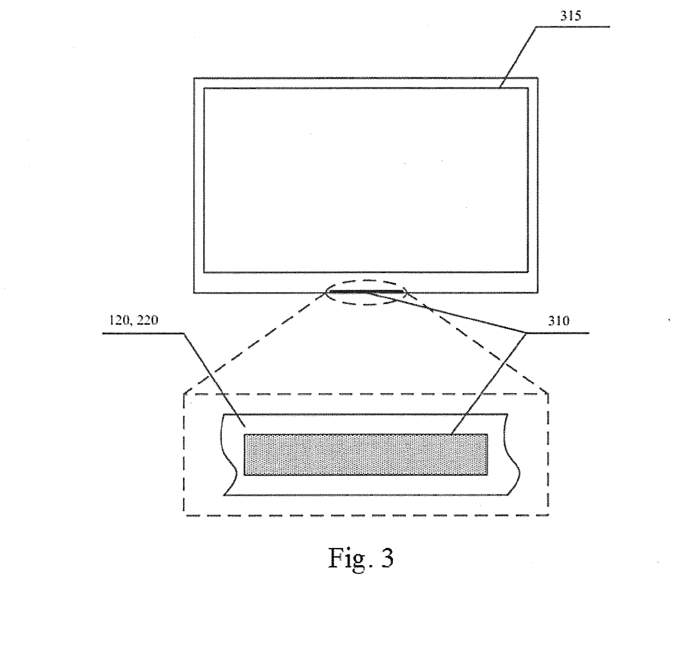

Taking TV for example, referring to Fig. 3 which is a diagram showing a configuration of a touch pad 120, 220, the touch pad may be arranged right in the middle position at the bottom 310 of the TV 315.

The controller 240 is configured to receive the touch control signal, parse the touch control operation according to the touch control signal, obtain working state of the electronic device, and control the electronic device according to the touch control operation and the working state of the electronic device.

The controller may parse the user's touch control operation on the touch pad according to the time when the touch control signal is received and the identification of the touch control point contained in the touch control signal. The touch control operation may be click operation, long press operation or slide operation, etc. The controller may carry out operation such as start-up, standby, menu selection and control instruction according to the touch control operation and the working state of the electronic device.

The controller 240 is configured to control the electronic device to be started when the electronic device is in standby state and the touch control operation is a first operation;

The first operation may be a long press operation. Taking the TV for example, the controller may control the TV to be started when the TV is powered on and in standby state, if the controller parses that the user is conducting a long press operation on the touch pad according to the touch control signal sent by the touch pad.

The controller 240 is configured to control the electronic device to be standby when the electronic device is in the started state and the touch control operation is a second operation.

The second operation may also be a long press operation. The controller may control the TV to be in standby state when the TV is started, if the controller parses that the user is conducting a long press operation on the touch pad according to the touch control signal sent by the touch pad.

The controller 240 is configured to switch an icon corresponding to a selected functionality item in a control interface when the electronic device is in the started state and displays the control interface, and when the touch control operation is a third operation; the control interface comprises the icon corresponding to at least one functionality item.

The third operation may be slide operation. For instance, the control interface of the TV may display one or more icons, and each icon corresponds to one functionality item. These functionality items may contain a searching remote control functionality item, a volume adjustment functionality item, a channel selection functionality item, an input source switch functionality item, a 3D model control functionality item and a brightness adjustment item, etc. When the TV displays the control interface and if the controller parses that the user's operation on the touch pad is a slide operation, the controller 240 switches the icon of the selected functionality item in the current displayed control interface. For instance, the channel selection functionality item is switched to the input source functionality item.

The icon corresponding to the functionality item displayed on the control interface comprises one icon corresponding to the selected functionality item. The selected functionality item and the unselected functionality item may be distinguished by the display effect. For example, the selected functionality item has the biggest size, or the selected functionality item corresponds to a colorful icon while the unselected functionality item corresponds to black and white ones, or the selected functionality item is displayed with highlight, etc.

When the controller is switching the icon corresponding to the selected functionality item in the control interface, it may also obtain the sliding direction of the slide operation, and switch the icon corresponding to the selected functionality item according to the sliding direction. For instance, the icons of respective functionality items of the control interface of the TV are arranged in a predetermined order. When the controller parses that the user's operation on the touch pad is a slide operation toward right, it switches the icon of the selected functionality item of the control interface to be the icon of the previous functionality item. When the controller parses that the user's operation on the touch pad is a slide operation toward left, it switches the icon of the selected functionality item of the control interface to be the icon of the next functionality item.

The sliding direction among the slide operation may be determined according to the sequence of the touch control points in the slide operation. For instance, preset serial numbers for respective touch control points on the touch pad in advance. When the user's finger touches one point by sliding, the touch pad sends a touch control signal which may carry the serial number of the touch control point to the controller. The controller determines the sliding direction according to the serial numbers of the touch control points contained in the successively received touch control signals.

The controller 240 is configured to carry out the control instruction corresponding to the selected functionality item in the control interface, when the electronic device is in the started state and displays the control interface, and when the touch control operation is the fourth operation.

When the selected functionality item corresponds to a secondary menu, the control instruction corresponding to the functionality item is the instruction used for instructing the electronic device to display the secondary menu of the selected functionality item; when the selected functionality item does not correspond to the secondary menu, the control instruction corresponding to the functionality item is the instruction to control the electronic device according to the function corresponding to the selected functionality item.

The fourth operation may be a click operation. When the TV displays the control interface and the controller parses that the user's touch control operation on the touch pad is a click operation, the control instruction corresponding to the selected functionality item is carried out. For instance, if the currently selected functionality icon is the icon of the searching remote control functionality item, and the functionality item does not correspond to the secondary menu, the controller would control the TV to send wireless signal to the remote control. The remote control rings by notification tone to notify the user of its location after the remote control receives the wireless signal; or when the currently selected functionality item icon is the input source switch functionality item, and the functionality item corresponds to the input source selection menu, the controller controls the TV to display the input source selection menu. The input source selection menu may contain the selection item of multiple input sources, the user may select a corresponding item by sliding in the touch pad left and right, and determine the input source corresponding to one selection item by clicking.

In conclusion, the touch control assembly shown in the exemplary embodiment parses the touch control operation on the touch pad by the signals sent by the touch pad, controls the electronic device according to the working state of the touch control operation and the electronic device. The user may control the electronic device according to different operations in the touch pad without seeking and pressing different physical keys. The problem of related technology that the user may easily make wrong operation when using the physical keys is solved, resulting in simplification of user operation and improved user experience.

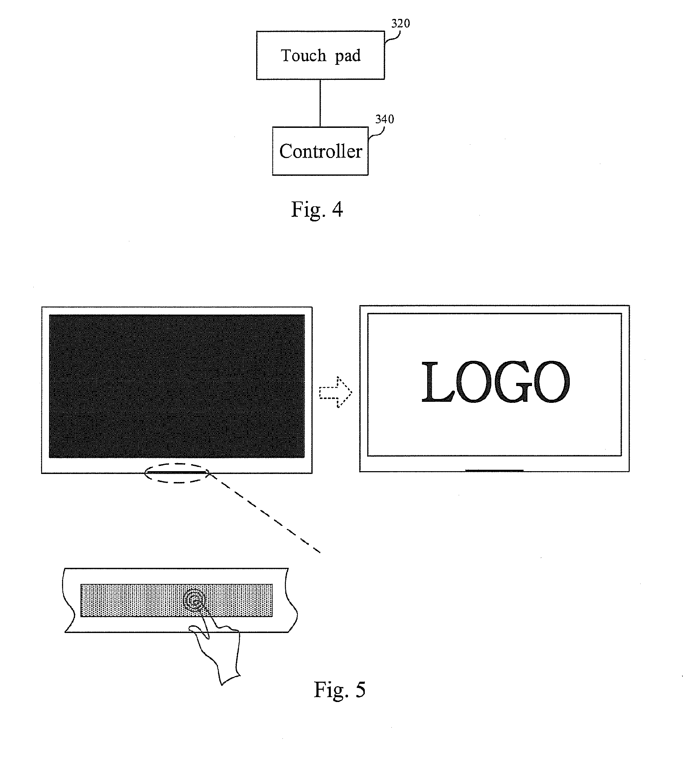

Fig. 4 is a block diagram illustrating a touch control assembly according to a further exemplary embodiment. The touch control assembly may be used in the electronic device for adjusting parameters of the electronic device. The electronic device may be the TV or the display. The touch control assembly comprises a touch pad 320 and a controller 340;

The touch pad 320 is configured to detect the touch control operation on the touch pad 320 and send the touch control signal corresponding to the touch control operation to the controller 340;

For instance, the touch pad may be arranged in several touch control points. When the user's finger touches the touch control point in the touch pad, electrostatic induction occurs, and current sensing signals are generated. The touch pad produces a corresponding touch control signal and sends it to the controller according to the generated sensing current signal. The touch control signal comprises an identification of the touch control point of the user's current touching position. For example, the identification of the touch control point may be the coordinates of the touch control point or the serial number of the touch control point.

Taking TV for example, referring to Fig. 3 which is a diagram showing a configuration of a touch pad, the touch pad may be arranged right in the middle position at the bottom of the TV.

The controller 340 is configured to receive the touch control signal, parse the touch control operation according to the touch control signal, obtain a working state of the electronic device, and control the electronic device according to the touch control operation and the working state of the electronic device.

The controller may parse the user's touch control operation on the touch pad according to the time when the touch control signal is received and the identification of the touch control point contained in the touch control signal. The touch control operation may be click operation, long press operation or slide operation, etc. The controller may carry out operation such as start-up, standby, menu selection and control instruction according to the touch control operation and the working state of the electronic device. Taking an intelligent TV as one example of the electronic device, the controller may be a central processing module in the intelligent TV.

The controller 340 is configured to control the electronic device to be started when the electronic device is in standby state and the touch control operation is a first operation;

The first operation may be a long press operation. Taking the TV for example, the controller may control the TV to be started when the TV is powered on and in standby state, if the controller parses that the user is conducting a long press operation on the touch pad according to the touch control signal sent by the touch pad.

For example, referring to Fig. 5, it is a diagram showing that the user is turning on an electronic device. When the TV is in the standby state, the controller controls the TV to be started when it parses that the user's finger keeps touching on the touch pad for over 3s.

The controller 340 is configured to control the electronic device to be standby when the electronic device is in the started state and the touch control operation is a second operation.

The second operation may also be a long press operation. The controller may control the TV to be in standby state when the TV is started, if the controller parses that the user is conducting a long press operation on the touch pad according to the touch control signal sent by the touch pad.

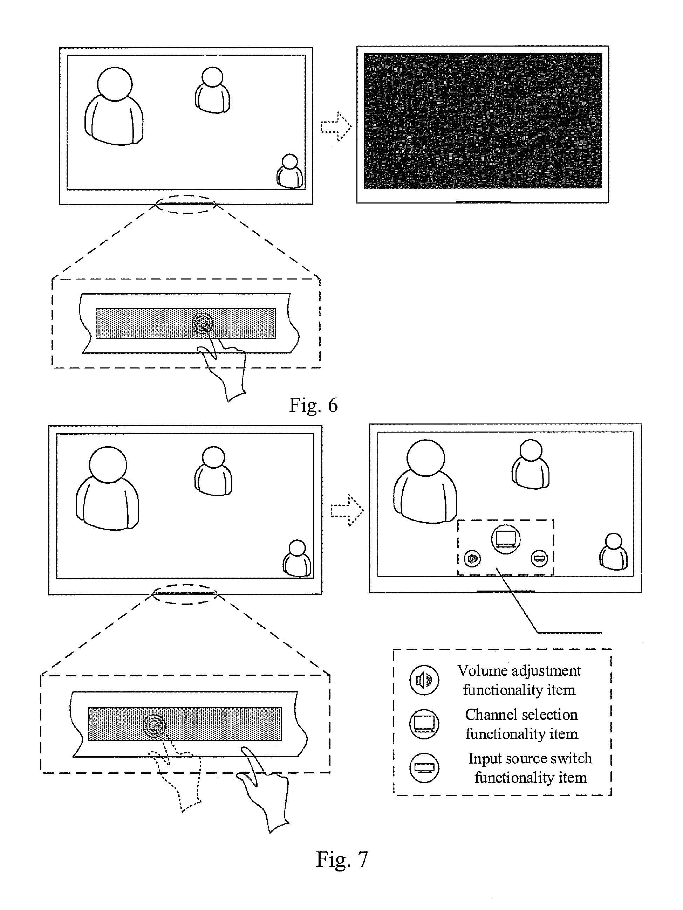

For example, referring to Fig. 6, it is a diagram showing that the user is turning off an electronic device. When the TV is in the started state, the controller controls the TV to be standby when it parses that the user's finger keeps touching on the touch pad for over 3s.

The controller 340 is configured to switch an icon corresponding to a selected functionality item in the control interface when the electronic device is in the started state and displays the control interface, and when the touch control operation is a third operation; the control interface comprises the icon corresponding to at least one functionality item.

The third operation may be slide operation. For instance, the control interface of the TV may display one or more icons, and each icon corresponds to one functionality item. These functionality items may contain searching a remote control functionality item, a volume adjustment functionality item, a channel selection functionality item, an input source switch functionality item, a 3D model control functionality item and a brightness adjustment item, etc. When the TV displays the control interface and if the controller parses that the user's operation on the touch pad is a slide operation, the icon of the selected functionality item is switched in the current displayed control interface. For instance, the channel selection functionality item is switched to the input source switch functionality item.

The icon corresponding to the functionality item displayed on the control interface comprises one icon corresponding to the selected functionality item. The selected functionality item and the unselected functionality item may be distinguished by the display effect. For example, the selected functionality item has the biggest size, or the selected functionality item corresponds to colorful icon while unselected functionality item corresponds to black and white ones, or the selected functionality item is displayed with highlight, etc.

When the controller is switching the icon corresponding to the selected functionality item in the control interface, it may also obtain the sliding direction of the slide operation, and switches the icon corresponding to the selected functionality item according to the sliding direction. For instance, the icons of respective functionality items of the control interface of the TV are arranged in a predetermined order. When the controller parses that the user's operation on the touch pad is a slide operation toward right, it switches the icon of the selected functionality item of the control interface to be the icon of the previous functionality item. When the controller parses that the user's operation on the touch pad is a slide operation toward left, it switches the icon of the selected functionality item of the control interface to be the icon of the next functionality item.

The sliding direction among the slide operation may be determined according the sequence of the touch control points in the slide operation. For instance, a serial number for each touch control point on the touch pad is preset in advance. When the user's finger touches one point by sliding, the touch pad sends the touch control signal which may carry the serial number of the touch control point to the controller. The controller determines the sliding direction according to the serial numbers of the touch control points contained in the successively received touch control signals.

The controller 340 is configured to obtain the GUI (Graphical User Interface) display state of the electronic device, when the electronic device is in the started state and does not display the control interface. It determines the functionality item list corresponding to the control interface according to the GUI display state, and displays corresponding icon of at least one functionality item according to the functionality item list; the at least one functionality item is all or portion of the functionality items contained in the functionality item list.

Taking TV for example of the electronic device, the TV may have different GUI display states, for instance, the digital TV program interface display state, the on demand interface display state, the network interface display state, or the game interface display state, etc. The functionality items contained in the control interface corresponding to different display states may be different. When the TV displays the control interface, for example, when the TV is started and does not display the control interface, if the controller in the TV parses out the user's click operation on the touch pad, it determines the TV's current display state at first, and determines the corresponding functionality item list according to the display state, then displays the control interface and the corresponding icon of at least one functionality item according to the functionality item list.

In order to minimize the negative effect on the TV's display image while displaying the control interface, and make the user's observation and operation easy, the control interface may be displayed transparently upon the TV's wallpaper, and a portion of the icons of the functionality item list corresponding to the control interface are displayed concentratedly. Please refer to Fig. 7, which is a diagram displaying the control interface. The TV is started and is in the digital TV program display state, the controller parses out the user's click operation on the touch pad, monitors that the functionality item list corresponding to the digital TV program display state contains 6 functionality items, e.g., a searching remote control functionality item, a volume adjustment functionality item, a channel selection functionality item, an input source switch functionality item, a 3D model control functionality item and a brightness adjustment item. The controller displays the icons corresponding to these 6 functionality items in the above mentioned sequence, and only displays 3 icons of the functionality items among these items at the same time. In Fig. 7, the controller controls the TV to display the volume adjustment functionality item, channel selection functionality item and input source switch functionality item respectively from left to right on the control interface, wherein, the channel selection functionality item which locates in the middle position is the default selected functionality item and its icon is the biggest in size.

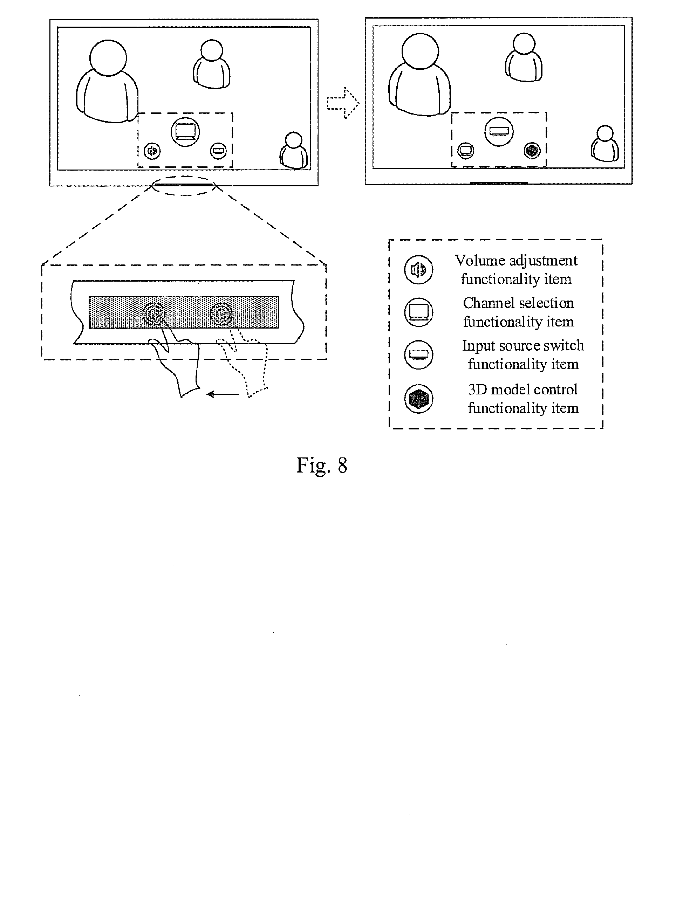

On basis of the state shown in Fig. 7, if the user performs left or right sliding on the touch pad, he may switch the selected functionality item. For example, please refer to Fig. 8, which is a diagram showing the functionality item switches. When the controller parses out that the user's finger is sliding toward the left on the touch pad, it adjusts the position of the displayed icon of each functionality item, e.g. hides the icon of the volume adjustment functionality item, moves the icon corresponding to the channel selection functionality item to the leftmost, switches the input source switch functionality item to be the selected functionality item and moves its icon to be displayed in the midmost position, and at the same time displays an icon of a functionality item, i.e. the icon of 3D model control functionality item, which is next to the input source switch functionality item in the rightmost.

The controller 340 is configured to carry out the control instruction corresponding to the selected functionality item in the control interface, when the electronic device is in the started state and displays the control interface, and when the touch control operation is the fourth operation.

When the selected functionality item corresponds to a secondary menu, the control instruction corresponding to the functionality item is the instruction used for instructing the electronic device to display the secondary menu of the selected functionality item; when the selected functionality item does not correspond to the secondary menu, the control instruction corresponding to the functionality item is the instruction to control the electronic device according to the function corresponding to the selected functionality item.

The fourth operation may be a click operation. When the TV displays the control interface and the controller parses that the user's touch control operation on the touch pad is a click operation, the control instruction corresponding to the selected functionality item is carried out. For instance, if the currently selected functionality icon is the icon of the searching remote control functionality item, and the functionality item does not correspond to the secondary menu, the controller would control the TV to send a wireless signal to the remote control. The remote control rings by notification tone to notify the user of its location after the remote control receives the wireless signal; or when the currently selected functionality item icon is the input source switch functionality item, and the functionality item corresponds to the input source selection menu, the controller controls the TV to display the input source selection menu. The input source selection menu may contain the selection item of multiple input sources, the user may select corresponding item by left and right sliding in the touch pad, and determine the input source corresponding to one selection item by clicking.

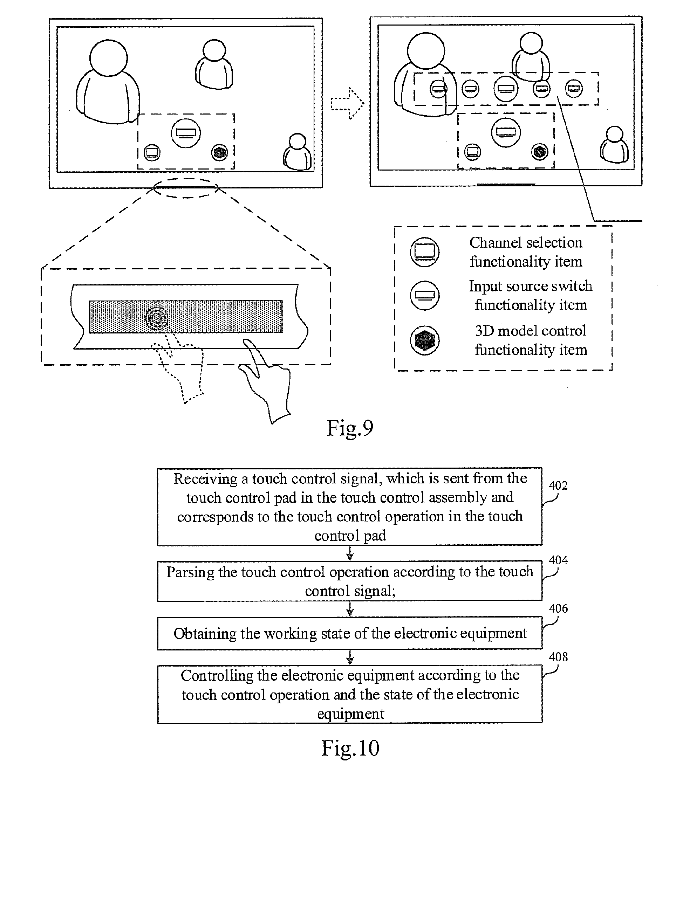

Fig. 9 shows a diagram displaying the secondary menu. The selected functionality item of current control interface is the input source switch functionality item. The controller enters into the secondary menu of the input source switch functionality item when it parses out the user's click operation on the touch pad. The secondary menu contains icons of 5 input sources. The icon of the currently selected input source is bigger than the icon of unselected input source and is highlighted. The user may switch the icon of the selected input source by left and right sliding. Differing from Fig. 8, the position of the icon in the secondary menu is kept unchanged, but only the size and display effect of the icon of the selected input source is changed.

In conclusion, the touch control assembly shown in the exemplary embodiment parses the touch control operation on the touch pad by the signals sent by the touch pad, controls the electronic device according to the working state of the touch control operation and the electronic device. The user may control the electronic device according to different operations in the touch pad with no need to seek and press different physical keys. The problem of related technology that the user may easily make wrong operation when using the physical keys is solved, resulting in simplification of user operation and improved user experience.

Fig. 10 is a flow chart of a method for controlling a device according to an exemplary embodiment. The device control method may be applied in the touch control assembly as shown in Figs. 1, 2 & 4 to control the electronic device comprising the touch pad. The electronic device may be a TV or a display. The device control method may comprises:
In step 402, a touch control signal is received, which is sent by the touch pad in the touch control assembly and corresponds to the touch control operation on the touch pad;
In step 404, the touch control operation is parsed according to the touch control signal;
In step 406, the working state of the electronic device is obtained;
In step 408, the electronic device is controlled according to the touch control operation and the state of the electronic device.

In conclusion, the device control method shown by the exemplary embodiment parses the touch control operation on the touch pad according to the touch control signal sent by the touch pad, and controls the electronic device according to the touch control operation and the state of the electronic device. The user may control the electronic device according to different operations in the touch pad with no need to seek and press different physical keys. The problem of related technology that the user may easily make wrong operation when using the physical keys is solved, resulting in simplification of user operation and improved user experience

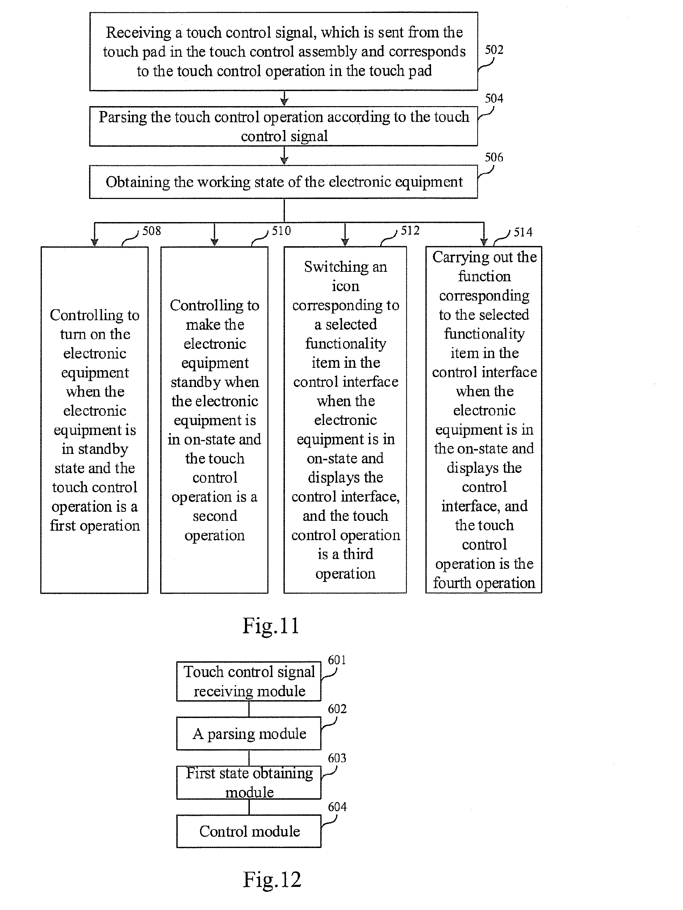

Fig. 11 is a flow chart of a method for controlling a device according to an exemplary embodiment.

In step 502, a touch control signal is received, which is sent by the touch pad in the touch control assembly and corresponds to the touch control operation on the touch pad;

For instance, the touch pad may be arranged with several touch control points. Electrostatic induction occurs when the user is touching the touch control point in the touch pad by his finger. A current sensing signal is generated. The touch pad generates a corresponding touch control signal according to the generated current sensing signal and sends it to the controller. The touch control signal contains the identification of the touch control point of the user's current touching location. For instance, the identification of the touch control point may be the coordinate or the serial number of the touch control point.

In step 504, the touch control operation is parsed according to the touch control signal;

The controller may parse the user's touch control operation on the touch pad according to the time when the touch control signal is received and the identification of the touch control point contained in the touch control signal. The touch control operation may be a click operation, long press operation or slide operation, etc. The controller may carry out operation such as start-up, standby, menu selection and control instruction according to the touch control operation and the working state of the electronic device.

In step 506, the working state of the electronic device is obtained;

The working state of the electronic device may comprise start-up, standby and display of the control interface, etc.

In step 508, the electronic device is controlled to be started when the electronic device is in standby state and the touch control operation is a first operation.

The first operation may be a long press operation. Taking the TV for example, the controller may control the TV to be started when the TV is powered on and in standby state, if the controller parses that the user is conducting a long press operation on the touch pad according to the touch control signal sent by the touch pad.

For example, referring to Fig. 5, it is a diagram showing that the user is turning on an electronic device. When the TV is in the standby state, the controller controls the TV to be started when it parses that the user's finger keeps touching on the touch pad for over 3s.

In step 510, the electronic device is controlled to be standby when the electronic device is in the started state and the touch control operation is a second operation;

The second operation may also be a long press operation. The controller may control the TV to be in standby state when the TV is started, if the controller parses that the user is conducting a long press operation on the touch pad according to the touch control signal sent by the touch pad.

For example, referring to Fig. 6, it is a diagram showing that the user is turning off an electronic device. When the TV is in the started state, the controller controls the TV to be in the standby state when it parses that the user's finger keeps touching on the touch pad for over 3s.

In step 512, an icon corresponding to a selected functionality item in the control interface is switched when the electronic device is in the started state and displays the control interface, and when the touch control operation is a third operation;

The control interface comprises the icon corresponding to at least one functionality item.

The third operation may be a slide operation. For instance, the control interface of the TV may display one or more icons, and each icon corresponds to one functionality item. These functionality items may contain a searching remote control functionality item, a volume adjustment functionality item, a channel selection functionality item, an input source switch functionality item, a 3D model control functionality item and a brightness adjustment item, etc. When the TV displays the control interface and if the controller parses that the user's operation on the touch pad is a slide operation, the icon of the selected functionality item is switched in the current displayed control interface. For instance, the channel selection functionality item is switch to the input source switch functionality item.

The icon corresponding to the functionality item displayed on the control interface comprises one icon corresponding to the selected functionality item. The selected functionality item and the unselected functionality item may be distinguished by the display effect. For example, the selected functionality item has the biggest size, or the selected functionality item corresponds to colorful icon and unselected functionality item corresponds to black and white ones, or the selected functionality item is displayed with highlight, etc.

When the controller is switching the icon corresponding to the selected functionality item in the control interface, it may also obtain the sliding direction of the slide operation, and switches the icon corresponding to the selected functionality item according to the sliding direction. For instance, the icons of the respectively functionality item of the control interface of the TV are arranged in predetermined order. When the controller parses that the user's operation on the touch pad is a slide operation toward right, it switches the icon of the selected functionality item of the control interface to be the icon of the previous functionality item. When the controller parses that the user's operation on the touch pad is a slide operation toward left, it switches the icon of the selected functionality item of the control interface to be the icon of the next functionality item.

The sliding direction among the slide operation may be determined according the successively sliding touch control points in the slide operation. For instance, a serial number for each touch control point on the touch pad is set in advance. When the user's finger touches one point by sliding, the touch pad sends the touch control signal which may carry the serial number of the touch control point to the controller. The controller determines the sliding direction according to the order of the received touch control signals containing the serial number of the touch control point.

The controller may obtain the GUI display state of the electronic device, when the electronic device is in the started state and does not display the control interface. It determines the functionality item list corresponding to the control interface according to the GUI display state, and displays a corresponding icon of at least one functionality item according to the functionality item list; the at least one functionality item is all or portion of the functionality items contained in the functionality item list.

Taking TV for example of the electronic device, the TV may have different GUI display states, for instance, the digital TV program interface display state, the on demand interface display state, the network interface display state, or the game interface display state, etc. The functionality items contained in the control interface corresponding to different display states may be different. When the TV displays the control interface, for example, when the TV is started and does not display the control interface, if the controller in the TV parses out the user's click operation on the touch pad, it determines the TV's current display state at first, and determines the corresponding functionality item list according to the display state, then displays the control interface and the corresponding icon of at least one functionality item according to the functionality item list.

In order to minimize the effect on the TV's display image while displaying the control interface, and make the user's observation and operation easy, the control interface may be displayed transparently upon the TV's wallpaper, and a portion of the icons of the functionality item list corresponding to the control interface is displayed concentratedly. Please refer to Fig. 7, which is a diagram displaying the control interface. The TV is started and is in the digital TV program display state, the controller parses out the user's click operation on the touch pad, monitors that the functionality item list corresponding to the digital TV program display state contains 6 functionality items, e.g., a searching remote control functionality item, a volume adjustment functionality item, a channel selection functionality item, an input source switch functionality item, a 3D model control functionality item and a brightness adjustment item. The controller displays the icons corresponding to these 6 functionality items according to the above mentioned sequence, and only displays 3 icons of the functionality items among these items at the same time. In Fig. 7, the controller controls the TV to display the volume adjustment functionality item, channel selection functionality item and input source switch functionality item respectively from left to right on the control interface, wherein, the channel selection functionality item which locates in the middle position is the default selected functionality item and its icon is the biggest in size.

On basis of the state shown in Fig. 7, if the user performs left and right sliding on the touch pad, he may switch the selected functionality item. For example, please refer to Fig. 8, which is a diagram showing the functionality item switches. When the controller parses out that the user's finger is sliding toward the left on the touch pad, it adjusts the position of the displayed icon of each functionality item, e.g. hides the icon of the volume adjustment functionality item, moves the icon corresponding to channel selection functionality item to the leftmost, switches the input source switch functionality item to be the selected functionality item and moves its icon to be displayed in the midmost position, at the same time displays an icon of a functionality item, i.e. the icon of 3D model control functionality item, which is next to the input source switch functionality item in the rightmost.

In step 514, the control instruction corresponding to the selected functionality item in the control interface is carried out when the electronic device is in the started state and displays the control interface, and when the touch control operation is the fourth operation.

When the selected functionality item corresponds to a secondary menu, the control instruction corresponding to the functionality item is the instruction used for instructing the electronic device to display the secondary menu of the selected functionality item; when the selected functionality item does not correspond to a secondary menu, the control instruction corresponding to the functionality item is the instruction to control the electronic device according to the function corresponding to the selected functionality item.

The fourth operation may be a click operation. When the TV displays the control interface and the controller parses that the user's touch control operation on the touch pad is a click operation, the control instruction corresponding to the selected functionality item is carried out. For instance, if the currently selected functionality icon is the icon of the searching remote control functionality item, and the functionality item does not correspond to a secondary menu, the controller would control the TV to send wireless signal to the remote control. The remote control rings by notification tone to notify the user of its location after the remote control receives the wireless signal; or when the currently selected functionality item icon is an input source switch functionality item, and the functionality item corresponds to the input source selection menu, the controller controls the TV to display the input source selection menu. The input source selection menu may contain the selection item of multiple input sources, the user may select a corresponding item by left and right sliding in the touch pad, and determines an input source corresponding to one selection item by clicking.

Fig. 9 shows a diagram displaying the secondary menu. The selected functionality item of the current control interface is the input source switch functionality item. The controller enters into the secondary menu of the input source switch functionality item when it parses out the user's click operation on the touch pad. The secondary menu contains icons of 5 input sources. The icon of the current selected input source is bigger than the icon of unselected input source and is highlighted. The user may switch the icon of the selected input source by left and right sliding. Different from Fig. 8, the position of the icon in the secondary menu is unchanged, and only the size and display effect of the icon of the selected input source are changed.

In conclusion, the device control method shown in the exemplary embodiment parses the touch control operation on the touch pad by the signals sent by the touch pad, controls the electronic device according to the working state of the touch control operation and the electronic device. The user may control the electronic device according to different operations in the touch pad with no need to seek and press different physical keys. The problem of related technology that the user may easily make wrong operation when using the physical keys is solved, while simplifying the user's operation and improving the user's experiences.

Fig. 12 is a block diagram illustrating a controller according to an exemplary embodiment. The controller may be applied in the touch control assembly as shown in Figs. 1, 2 & 4 to control the electronic device comprising the touch pad. The electronic device may be a TV or a display. The controller may comprises: a touch control signal receiving module 601, a parsing module 602, a first state obtaining module 603 and a control module 604;

The touch control signal receiving module 601 is configured to receive a touch control signal, which is sent by the touch pad in the touch control assembly and corresponds to the touch control operation on the touch pad;

The parsing module 602 is configured to parse the touch control operation according to the touch control signal;

The first state obtaining module 603 is configured to obtain the working state of the electronic device;

The control module 604 is configured to control the electronic device according to the touch control operation and the state of the electronic device.

In conclusion, the controller shown by the exemplary embodiment parses the touch control operation on the touch pad according to the touch control signal sent by the touch pad, and controls the electronic device according to the touch control operation and the state of the electronic device. The user may control the electronic device according to different operations in the touch pad with no need to seek and press different physical keys. The problem of related technology that the user may easily make wrong operation when using the physical keys is solved, while simplifying the user's operation and improving the user's experiences.

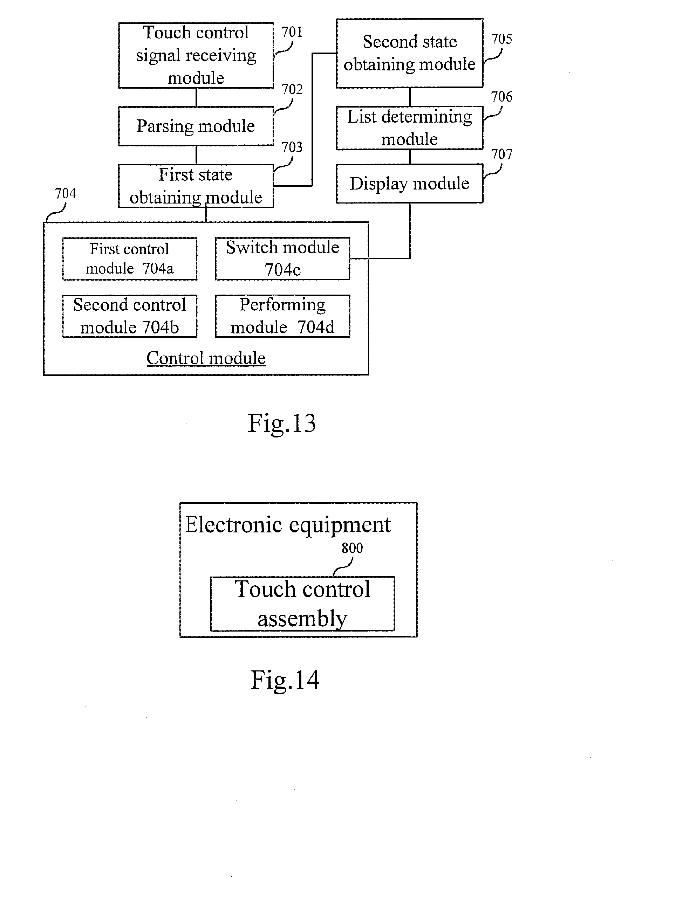

Fig. 13 is a block diagram illustrating a controller according to another exemplary embodiment. The controller may be applied in the touch control assembly as shown in Figs. 1, 2 & 4 to control the electronic device comprising the touch pad. The electronic device may be a TV or a display. The controller may comprises: a touch control signal receiving module 701, a parsing module 702, a first state obtaining module 703 and a control module 704;

The touch control signal receiving module 701 is configured to receive a touch control signal, which is sent by the touch pad in the touch control assembly and corresponds to the touch control operation on the touch pad;

The parsing module 702 is configured to parse the touch control operation according to the touch control signal;

The first state obtaining module 703 is configured to obtain the working state of the electronic device;

The control module 704 is configured to control the electronic device according to the touch control operation and the state of the electronic device.

The control module 704 comprises a first control module 704a and a second control module 704b;

The first control module 704a is configured to control the electronic device to be started when the electronic device is in the standby state and the touch control operation is a first operation;

The second control module 704b is configured to control the electronic device to be standby when the electronic device is in the started state and the touch control operation is a second operation.

The control module 704 comprises a switch module 704c;

The switch module 704c is configured to switch an icon corresponding to a selected functionality item in the control interface when the electronic device displays the control interface and the touch control operation is a third operation; the control interface comprises the icon corresponding to at least one functionality item.

The controller further comprises: a second state obtaining module 705, a list determining module 706 and a display module 707;

The second state obtaining module 705 is configured to obtain the GUI display state of the electronic device when the electronic device is in the started state and does not display the control interface;

The list determining module 706 is configured to determine the functionality item list corresponding to the control interface according to the GUI display state;

The display module 707 is configured to display the control interface according to the functionality item list, and the at least one functionality item contained in the control interface is all or portion of the function items contained in the functionality item list.

The control module 704 comprises a performing module 704d;

The performing module 704d is configured to perform the control instruction corresponding to the selected functionality item in the control interface, when the electronic device displays the control interface and the touch control operation is the fourth operation.

In conclusion, the controller shown by the exemplary embodiment parses the touch control operation on the touch pad according to the touch control signal sent by the touch pad, and controls the electronic device according to the touch control operation and the state of the electronic device. The user may control the electronic device according to different operations in the touch pad with no need to seek and press different physical keys. The problem of related technology that the user may easily make wrong operation when using the physical keys is solved, while simplifying the user's operation and improving the user's experiences.

Fig. 14 is a block diagram illustrating an electronic device according to an exemplary embodiment. The electronic device may be a TV. The electronic device may comprise: at least one touch control assembly 800 shown by anyone of Figs. 1, 2 or 4.

In conclusion, the electronic device shown by the exemplary embodiment parses the touch control operation on the touch pad according to the touch control signal sent by the touch pad, and controls the electronic device according to the touch control operation and the state of the electronic device. The user may control the electronic device according to different operations in the touch pad with no need to seek and press different physical keys. The problem of related technology that the user may easily make wrong operation when using the physical keys is solved while simplifying the user's operation and improving the user's experiences.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. It is intended that the specification and examples be considered as exemplary only, with a true scope and spirit of the invention being indicated by the following claims.

It will be appreciated that the present invention is not limited to the exact construction that has been described above and illustrated in the accompanying drawings.

## Claims

1. A touch control assembly for use in an electronic device, **characterized in that** the touch control assembly comprises: a touch pad (120, 220, 320) and a controller (140, 240, 340);
the touch pad (120, 220, 320) being configured to detect a touch control operation on the touch pad (120, 220, 320) and send a touch control signal corresponding to the touch control operation to the controller (140, 240, 340);
the controller (140, 240, 340) being configured to receive the touch control signal, parse the touch control operation according to the touch control signal, obtain a working state of the electronic device, and control the electronic device according to the touch control operation and the working state of the electronic device.

2. The touch control assembly according to claim 1, wherein
the controller (240, 340) is configured to control the electronic device to start when the electronic device is in standby state and the touch control operation is a first operation;
the controller (240, 340) is configured to control the electronic device to be standby when the electronic device is in started state and the touch control operation is a second operation.

3. The touch control assembly according to claim 1 or 2, wherein
the controller (240, 340) is configured to switch an icon corresponding to a selected functionality item in a control interface when the electronic device is in the started state and displays the control interface, and when the touch control operation is a third operation; wherein the control interface comprises icons corresponding to at least one functionality item.

4. The touch control assembly according to claim 3, wherein
the controller (340) is configured to obtain a GUI display state of the electronic device when the electronic device is in the started state and does not display the control interface, determine a functionality item list corresponding to the control interface according to the GUI display state, and display an icon corresponding to the at least one functionality item according to the functionality item list, the at least one functionality item being all or portion of the functionality items contained in the functionality item list.

5. The touch control assembly according to any one of claims 1 to 4, wherein,
the controller (240, 340) is configured to perform a control instruction corresponding to a selected functionality item in the control interface when the electronic device is in the started state and displays the control interface, and when the touch control operation is a fourth operation.

6. A method for controlling a device, the method being used in the touch control assembly according to any one of claims 1 to 5, **characterized in that** the touch control assembly is for use in the electronic device, and the method comprises:
receiving (402, 502) a touch control signal sent from the touch control assembly and corresponding to a touch control operation on the touch pad;
parsing (404, 504) the touch control operation according to the touch control signal;
obtaining (406, 506) a working state of the electronic device; and
controlling (408, 508) the electronic device according to the touch control operation and the working state of the electronic device.

7. The method according to claim 6, wherein the controlling step of the electronic device according to the touch control operation and the working state of the electronic device comprises:
controlling the electronic device to start when the electronic device is in the standby state and the touch control operation is a first operation;
controlling (510) the electronic device to be standby when the electronic device is in the started state and the touch control operation is a second operation.

8. The method according to claim 6 or 7, wherein the controlling step of the electronic device according to the touch control operation and the working state of the electronic device comprises:
switching (512) an icon corresponding to a selected functionality item in a control interface when the electronic device is in the started state and displays the control interface, and when the touch control operation is a third operation; wherein the control interface comprises the corresponding icon of at least one functionality item.

9. The method according to claim 8, wherein the method further comprising:
obtaining a GUI display state of the electronic device when the electronic device is in the started state and does not display the control interface;
determining a functionality item list corresponding to the control interface according to the GUI display state; and
displaying an icon corresponding to the at least one functionality item according to the functionality item list; the at least one functionality item being all or portion of functionality items comprised in the functionality item list.

10. The method according to any one of claims 6 to 9, wherein the controlling step of the electronic device according to the touch control operation and the working state of the electronic device comprises:
performing a control instruction corresponding to a selected functionality item in the control interface when the electronic device is in the started state and displays the control interface, and when the touch control operation is a fourth operation.

11. A controller for use in the touch control assembly according to any one of claims 1 to 5, **characterized in that** the touch control assembly is for use in an electronic device, and the controller comprises:
a touch control signal receiving module (601, 701) configured to receive a touch control signal sent from a touch pad in the touch control assembly and corresponding to a touch control operation on the touch pad;
a parsing module (602, 702) configured to parse the touch control operation according to the touch control signal;
a first state obtaining module (603, 703) configured to obtain a working state of the electronic device; and
a control module (604, 704) configured to control the electronic device according to the touch control operation and the working state of the electronic device.

12. The controller according to claim 11, wherein the controller further comprises:
a second state obtaining module (705) configured to obtain a GUI display state of the electronic device when the electronic device is in the started state and does not display a control interface;
a list determining module (706) configured to determine a functionality item list corresponding to the control interface according to the GUI display state; and
a display module (707) configured to display the control interface according to the functionality item list, wherein the at least one functionality item comprised in the control interface is all or portion of functionality items comprised in the functionality item list.

13. An electronic device, **characterized in that**, the electronic device comprising: the touch control assembly according to any one of claims 1 to 5.

14. A computer program including instructions for executing the steps of a method for controlling a device according to any one of claims 6 to 10 when said program is executed by a computer.

15. A recording medium readable by a computer and having recorded thereon a computer program including instructions for executing the steps of a method for controlling a device according to any one of claims 6 to 10.
